# FASCICULE DE BREVET EUROPEEN

(11) **EP 0 490 723 B1**
(45) Date de publication et mention de la délivrance du brevet: **28.09.1994**
(21) Numéro de dépôt: 91403193.5
(22) Date de dépôt: 26.11.1991
(51) Int. Cl.: H05B 3/86, H05B 3/06

(54) **Vitrage en verre feuilleté chauffable avec élément de connexion de câble**
Beheizbare Verbundglasscheibe mit einem Kabelanschlussstück
Heated laminated glass window with a cable connecting element

(30) Priorité: 08.12.1990 DE 9016664 U
(43) Date de publication de la demande: 17.06.1992
(73) Titulaire: SAINT-GOBAIN VITRAGE INTERNATIONAL, 92400 Courbevoie (FR); VEGLA Vereinigte Glaswerke GmbH, D-52066 Aachen (DE)
(72) Inventeur: Pikhard, Siegfried, W-5106 Roetgen (DE)
(74) Mandataire: Muller, René

(56) Documents cités:
- EP-A- 0 278 611
- DE-A- 1 923 311
- DE-A- 3 402 518
- FR-A- 2 013 512
- FR-A- 2 390 882
- FR-A- 2 538 175
- US-A- 3 410 739

## Description

La présente invention concerne un vitrage en verre feuilleté, comportant des fils chauffants disposés dans la couche intermédiaire thermoplastique, qui, le long d'au moins un bord du vitrage, sont connectés de manière conductrice à une bande de clinquant servant à alimenter les fils chauffants en courant électrique.

Dans les vitrages en verre feuilleté connus de ce type, les bandes de clinquant servant à l'alimentation électrique sont, en vue de la connexion du câble d'alimentation électrique, soit elles-mêmes amenées à l'extérieur du vitrage feuilleté, soit connectées à de minces pattes métalliques qui sont amenées telles quelles latéralement hors du vitrage feuilleté et sont connectées au câble d'alimentation électrique.

Les réalisations connues des connexions de câble présentent divers inconvénients. D'une part, des parties des éléments de connexion de câble s'étendent en effet latéralement au-delà de la surface de pourtour extérieur du vitrage feuilleté, de sorte que, lors de la manipulation du vitrage feuilleté et lors de son transport, ils sont exposés à des risques d'endommagement considérables. D'autre part, la fabrication de la connexion de câble constitue, dans son ensemble, une opération qui exige une attention particulière. Et enfin, la solidité et la durabilité des connexions électriques connues laissent, dans l'ensemble, à désirer.

L'invention a pour but de procurer un vitrage en verre feuilleté du type spécifié muni d'un élément de connexion électrique qui présente un faible risque d'endommagement pour la connexion électrique et une résistance élevée de cette connexion électrique, dans son ensemble, et dans lequel la connexion électrique soit réalisée d'une manière relativement simple.

Le vitrage en verre feuilleté muni de la connexion électrique conforme à l'invention se distingue par les particularités suivantes :
a) à la bande de clinquant destinée à assurer l'alimentation électrique des fils chauffants sont connectés, de manière conductrice, une patte à insérer et un élément de connexion de câble présentant une virole de connexion de câble;
b) une des feuilles de verre individuelles formant le vitrage feuilleté présente, dans la zone de l'élément de connexion de câble, un évidement marginal correspondant à peu près au diamètre extérieur de la virole de connexion de câble, et
c) la virole de connexion de câble est disposée dans le creux formé par l'évidement marginal de la première feuille de verre individuelle.

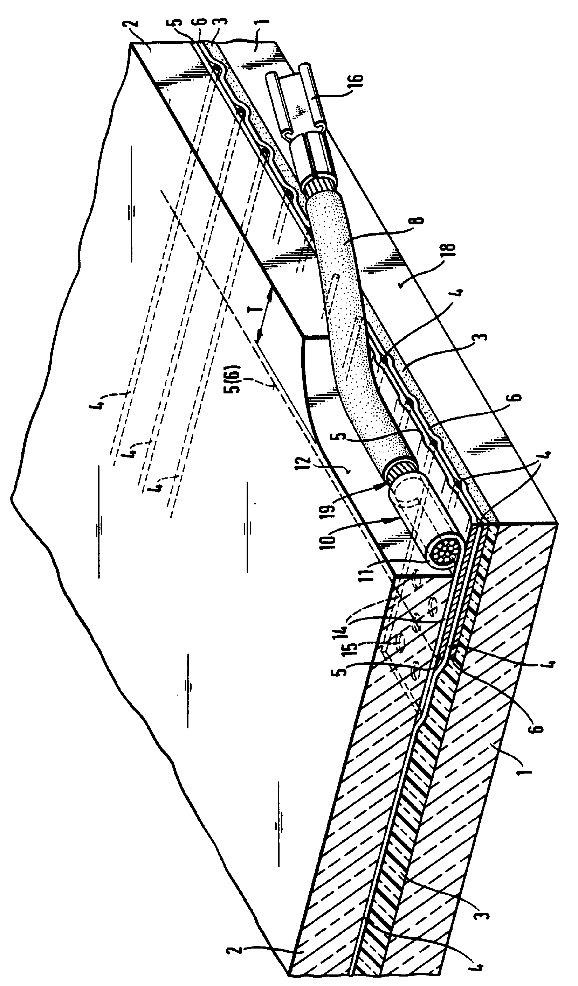

D'autres détails, développements et avantages du vitrage en verre feuilleté conforme à l'invention peuvent être obtenus dans les sous-revendications et dans la description suivante d'un exemple de réalisation préféré de l'invention, donnée avec référence au dessin annexé.

Le dessin est une vue en perspective fragmentaire, en partie en coupe, d'un vitrage en verre feuilleté chauffable dans la zone d'une connexion de câble.

Le vitrage en verre feuilleté comprend une feuille de verre au silicate 1 et une feuille de verre au silicate 2 qui sont unies l'une à l'autre par la couche intermédiaire thermoplastique 3, par exemple en polyvinylbutyral, pour former le vitrage en verre feuilleté. Dans la couche intermédiaire thermoplastique 3 sont noyés de fins fils de résistance 4. Les fils de résistance 4 sont, par exemple, disposés au niveau de deux bords opposés du vitrage, chaque fois entre deux bandes de clinquant 5 et 6. Les bandes de clinquant 5, 6 sont, par exemple, constituées de bandes de clinquant de cuivre de 0,05 mm d'épaisseur et de 5 mm de largeur recouvertes de brasure à l'étain à bas point de fusion. Bien entendu, les bandes de clinquant peuvent également présenter une autre largeur et, le cas échéant, une autre épaisseur en fonction de la puissance électrique du vitrage chauffant. Lors du pressage du paquet de couches à chaud et sous pression dans l'autoclave, les bandes de clinquant épousent la forme des fils de résistance 4 et, grâce à la brasure qui fond à ces températures, le contact aux fils de résistance est en même temps encore amélioré. Les bandes de clinquant 5, 6, d'une part, servent de barres omnibus pour l'alimentation électrique des fils de résistance 4 et, d'autre part, ont pour tâche d'établir la connexion au câble d'alimentation électrique 8. A cet effet, est prévu l'élément de connexion de câble 10 qui est en liaison avec la bande de clinquant supérieure 5 et est connecté au câble 8 par l'intermédiaire d'une virole de connexion de câble 11.

La feuille de verre au silicate supérieure 2 présente, dans la zone de l'élément de connexion de câble 10, un évidement marginal 12. La profondeur T de cet évidement marginal 12 correspond à peu près au diamètre extérieur de la virole de connexion de câble 11, qui est disposée de cette façon à l'intérieur du creux formé par l'évidement marginal et est dès lors protégée contre les sollicitations mécaniques et les chocs.

L'élément de connexion de câble 10 est constitué, par exemple, d'un segment de tôle de laiton de 0,2 mm d'épaisseur qui est roulé à une extrémité sous la forme de la virole de connexion de câble 11. La partie de l'élément de connexion de câble 10 reliée à la virole 11 forme la patte à insérer 14 qui est en contact conducteur avec la bande de clinquant 5. La patte à insérer 14 est percée d'une série de trous 15 qui servent à renforcer la jonction brasée à la bande de clinquant 5 et à créer un ancrage dans la couche intermédiaire thermoplastique. La patte à insérer 14 est, par conséquent, de préférence plus longue que la largeur des bandes de clinquant 5, 6. Le câble 8 est brasé, à cette extrémité, à la virole de connexion de câble 11, tandis que l'autre extrémité du câble 8 est brasée, par exemple, à une fiche de connexion plate 16.

Pour fabriquer le vitrage chauffant, on procède de la manière suivante : on pose tout d'abord, sur une pellicule 3 de polyvinylbutyral correspondant à la grandeur du vitrage chauffant, le long de deux bords latéraux opposés, des bandes de clinquant étamé 6 qu'on fait adhérer par un chauffage local. Ensuite, on garnit la pellicule au moyen des fils de résistance 4 que l'on fixe également sur cette pellicule, lors de la pose, par un chauffage local. On amène les fils 4 par-dessus les bandes de clinquant 6. Lorsque tous les fils de résistance sont posés sur la pellicule, on pose chaque fois sur chaque bande de clinquant 6 une autre bande de clinquant 5, de telle façon que les extrémités des fils de résistance 4 soient situées entre les bandes de clinquant 5, 6. On chauffe localement pendant peu de temps les bandes de clinquant 5, 6 chaque fois étamé, de telle sorte que la couche de brasure fonde et réunisse solidement les deux bandes de clinquant l'une à l'autre.

La pellicule 3 ainsi préparée est à présent posée sur la feuille de verre 1 au bord de laquelle elle se termine. La feuille de verre supérieure 2, qui présente des évidements marginaux 12, est ensuite posée sur la pellicule 3 et l'ensemble de couches est légèrement comprimé.

Dans le cas représenté, l'agencement est tel que les bandes de clinquant 5, 6, dans la zone de l'évidement marginal 12, se terminent au ras de la face périphérique 18 de la feuille de verre inférieure 1. On peut cependant aussi faire en sorte que, dans la zone de l'évidement périphérique, les bandes de clinquant 5, 6 soient disposées suffisamment en retrait par rapport à la face périphérique 18 pour qu'elles ne dépassent pas le bord de l'évidement marginal 12 de la feuille de verre supérieure 2.

Un élément de connexion de câble 10 est à présent glissé, dans la zone de l'évidement marginal 12, avec la patte à insérer 14, entre la feuille de verre 2 et la bande de clinquant supérieure 5, et ce dans une mesure telle que la virole 11 ne fasse pas saillie ou ne le fasse pas de manière sensible au-delà de la face périphérique 18 de la feuille de verre 1. Le paquet de couches ainsi préparé est à présent soumis au processus de jonction habituel sous l'effet de la température et de la pression.

Au terme du processus de jonction, la section d'extrémité 19 du câble 8 est introduite dans la virole 11 et est brasée à cette virole 11. Au cours de cette opération de brasage, la patte à insérer 14 de l'élément de connexion de câble s'échauffe également au point que la couche d'étain sur la bande de clinquant 5 fond et assure, par une pénétration partielle dans les trous 15, une jonction solide et durable entre l'élément de connexion de câble et la bande de clinquant 5.

## Revendications

1. Vitrage en verre feuilleté pourvu de fils chauffants disposés dans la couche intermédiaire thermoplastique, qui sont connectés de manière conductrice, le long d'au moins un bord du vitrage à au moins une bande de clinquant servant à l'alimentation électrique des fils chauffants,
caractérisé par les particularités suivantes :
a) à la bande de clinquant (5) destinée à l'alimentation électrique des fils chauffants (4) est connecté, de manière conductrice, un élément de connexion de câble (10) présentant une patte à insérer (14) et une virole de connexion de câble (11);
b) une des feuilles de verre individuelles (2) formant le vitrage feuilleté présente, dans la zone de l'élément de connexion de câble (10), un évidement marginal (12) correspondant à peu près au diamètre extérieur de la virole de connexion de câble (11), et
c) la virole de connexion de câble (11) est disposée dans la zone du creux formé par l'évidement marginal (12) de la première feuille de verre (2).

2. Vitrage en verre feuilleté suivant la revendication 1, caractérisé en ce que l'élément de connexion de câble (10) est constitué d'un segment de tôle de laiton étamée dont une partie d'extrémité est roulée sur elle-même pour former la virole de connexion de câble (11).

3. Vitrage feuilleté suivant la revendication 1 ou 2, caractérisé en ce que la patte à insérer (14) de l'élément de connexion de câble (10) est percée de trous (15).

4. Vitrage feuilleté suivant l'une quelconque des revendications 1 à 3, caractérisé en ce que deux bandes de clinquant (5, 6) sont prévues, entre lesquelles les fils chauffants (4) sont noyés.

5. Vitrage feuilleté suivant l'une quelconque des revendications 1 à 4, caractérisé en ce que les bandes de clinquant (5, 6) sont en clinquant de cuivre étamé.

6. Vitrage feuilleté suivant l'une quelconque des revendications 1 à 5, caractérisé en ce que la section d'extrémité (19) du câble d'alimentation électrique (8) est brasée à la virole de connexion de câble (11).

7. Vitrage feuilleté suivant l'une quelconque des revendications 1 à 6, caractérisé en ce que la patte à insérer (14) de l'élément de connexion de câble (10) est disposée entre la bande de clinquant (5) et la feuille de verre (2).

8. Vitrage feuilleté suivant l'une quelconque des revendications 1 à 7, caractérisé en ce que la patte à insérer (14) de l'élément de connexion de câble (10) est brasée à la bande de clinquant (5).

## Patentansprüche

1. Verbundglasscheibe mit in der thermoplastischen Zwischenschicht angeordneten Heizdrähten, die entlang wenigstens einer Glasscheibenkante mit wenigstens einem der Stromzuführung zu den Heizdrähten dienenden Metallfolienband leitend verbunden sind,
**gekennzeichnet** durch folgende Merkmale:
a) mit dem der Stromzuführung zu den Heizdrähten (4) dienenden Metallfolienband (5) ist ein eine Einsteckfahne (14) und eine Kabelanschlußhülse (11) aufweisendes Kabelanschlußelement (10) leitend verbunden;
b) eine der die Verbundglasscheibe bildenden Einzelglasscheiben (2) weist im Bereich des Kabelanschlußelements (10) eine etwa dem Außendurchmesser der Kabelanschlußhülse (11) entsprechende Randausnehmung (12) auf, und
c) die Kabelanschlußhülse (11) liegt im Bereich der durch die Randausnehmung (12) der ersten Glasscheibe (2) gebildeten Hohlkehle.

2. Verbundglasscheibe nach Anspruch 1, dadurch gekennzeichnet, daß das Kabelanschlußelement (10) aus einem Abschnitt aus verzinntem Messingblech besteht, dessen einer Endabschnitt zu der Kabelanschlußhülse (11) aufgerollt ist.

3. Verbundglasscheibe nach Anspruch 1 oder 2, dadurch gekennzeichnet, daß die Einsteckfahne (14) des Kabelanschlußelements (10) mit Löchern (15) versehen ist.

4. Verbundglasscheibe nach einem der Ansprüche 1 bis 3, dadurch gekennzeichnet, daß zwei Metallfolienbänder (5,6) vorgesehen sind, zwischen denen die Heizdrähte (4) eingebettet sind.

5. Verbundglasscheibe nach einem der Ansprüche 1 bis 4, dadurch gekennzeichnet, daß die Metallfolienbänder (5,6) aus verzinnter Kupferfolie bestehen.

6. Verbundglasscheibe nach einem der Ansprüche 1 bis 5, dadurch gekennzeichnet, daß der Endabschnitt (19) des Stromzuführungskabels (8) mit der Kabelanschlußhülse (11) verlötet ist.

7. Verbundglasscheibe nach einem der Ansprüche 1 bis 6, dadurch gekennzeichnet, daß die Einsteckfahne (14) des Kabelanschlußelements (10) zwischen dem Metallfolienband (5) und der Glasscheibe (2) angeordnet ist.

8. Verbundglasscheibe nach einem der Ansprüche 1 bis 7, dadurch gekennzeichnet, daß die Einsteckfahne (14) des Kabelanschlußelements (10) mit dem Metallfolienband (5) verlötet ist.

## Claims

1. Laminated glass glazing provided with heating wires placed in an intermediate thermoplastic layer and which are conductively connected along at least one edge of the glazing to at least one foil strip used for the electric power supply of the heating wires, characterized by the following features:
a) to the foil strip (5) used for the electric power supply of the heating wires (4) is conductively connected a cable connection element (10) having a clip to be inserted (14) and a cable connection ferrule (11),
b) one of the individual glass sheets (2) forming the laminated glazing has, in the area of the cable connecting element (10), a marginal recess (12) roughly corresponding to the external diameter of the cable connection ferrule (11) and
c) the cable connection ferrule (11) is located in the area of the depression formed by the marginal recess (12) of the first glass sheet (2).

2. Laminated glass glazing according to claim 1, characterized in that the cable connecting element (10) is constituted by a galvanized brass sheet segment, whereof an end portion is rolled onto itself in order to form the cable connection ferrule (11).

3. Laminated glazing according to claim 1 or 2, characterized in that the clip to be inserted (14) of the cable connecting element (10) is perforated by holes (15).

4. Laminated glazing according to any one of the claims 1 to 3, characterized in that two foil strips (5, 6) are provided and between them are embedded the heating wires (4).

5. Laminated glazing according to any one of the claims 1 to 4, characterized in that the foil strips (5, 6) are made from galvanized copper foil.

6. Laminated glazing according to any one of the claims 1 to 5, characterized in that the end section (19) of the electric supply cable (8) is brazed to the cable connection ferrule (11).

7. Laminated glazing according to any one of the claims 1 to 6, characterized in that the clip to be inserted (14) of the cable connecting element (10) is positioned between the foil strip (5) and the glass sheet (2).

8. Laminated glazing according to any one of the claims 1 to 7, characterized in that the clip to be inserted (14) of the cable connecting element (10) is brazed to the foil strip (5).
